Europäisches Patentamt

European Patent Office

Office européen des brevets

(19)

(11) Publication number: **0 350 074 B1**

## EUROPEAN PATENT SPECIFICATION

(12)

(45) Date of publication of patent specification: **04.10.95** (51) Int. Cl.⁶: **G01F 23/14**, G01F 23/18, G01F 17/00

(21) Application number: **89112499.2**

(22) Date of filing: **07.07.89**

(54) Method and apparatus for measuring the content of a storage vessel.

| | |
|---|---|
| (30) Priority: **07.07.88 JP 169633/88**<br>**07.07.88 JP 169634/88**<br>**07.07.88 JP 169635/88**<br>**07.02.89 JP 27808/89**<br>**07.02.89 JP 27809/89**<br>**14.03.89 JP 28948/89** | (73) Proprietor: **KANSEI CORPORATION**<br>**2-1910, Nisshin-cho**<br>**Omiya City,**<br>**Saitama Prefecture (JP)** |
| (43) Date of publication of application:<br>**10.01.90 Bulletin 90/02** | (72) Inventor: **Watanabe, Kajiro**<br>**No. 4-15-15, Maehara-cho**<br>**Koganei City**<br>**Tokyo (JP)**<br>Inventor: **Ohneda, Katushi c/o Kanto Seiki** |
| (45) Publication of the grant of the patent:<br>**04.10.95 Bulletin 95/40** | **Co., Ltd.**<br>**No. 2-1910, Nisshin-cho**<br>**Omiya City** |
| (84) Designated Contracting States:<br>**DE GB SE** | **Saitama Prefecture (JP)** |
| (56) References cited:<br>**GB-A- 2 144 550**<br>**US-A- 4 599 892**<br><br>**ISA TRANSACTIONS, vol. 27, no. 4, 1988,**<br>**Pittsburgh, US, pp. 9-19 ; K. Watanabe et al. :**<br>**"Volume Measurement of Deformed Materials in Tanks"** | (74) Representative: **Grünecker, Kinkeldey, Stockmair & Schwanhäusser Anwaltssozietät**<br>**Maximilianstrasse 58**<br>**D-80538 München (DE)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a device for and a method of measuring the contents of a vessel according to the preamble of claims 1 and 9, respectively.

Such a prior art measuring device is known from US-A-4,599,892 and comprises means defining a chamber; a displacement device disposed in said chamber for varying the pressure in said chamber, said displacement device comprising a diaphragm, said diaphragm partitioning said chamber into first and second sub-chambers; passage means fluidly communicating said chamber with the interior of said vessel; a first pressure sensor producing a first output signal indicative of the pressure in said first sub-chamber; a second pressure sensor producing a second output signal indicative of the pressure in said second sub-chamber; and circuit means for receiving and processing the output signals of said first and second pressure sensors and for producing and outputting a signal indicative of the contents of said vessel, said circuit means including filtering means for filtering said first and second output signals.

Moreover, this prior art measuring device comprises a further pressure sensor disposed in the interior of said vessel. During operation of this measuring device the displacement means in the chamber is driven at various frequencies, thus producing low and high frequency pressure variations inside the chamber and inside the vessel, respectively. These static and dynamic pressure variations detected by the respective sensor inside the chamber and the vessel serve as a basis for calculating a free space inside the interior of said vessel. This free space is subtracted from a known vessel capacity, which leads to the remaining contents (for example, the remaining fuel inside a fuel tank) in the vessel.

GB-A-21 44 550 discloses a volume measuring system which comprises a chamber; a diaphragm partitioning said chamber into two sub-chambers; one pressure sensor provided in each sub-chamber; and a circuit for driving the diaphragm and for processing the sensor signals in order to obtain an output signal indicative of a volume which is connected to one of the sub-chambers by a passage.

The diaphragm is driven by a periodic square wave signal. During measuring operation, both sensor signals are sampled over a plurality of periods at certain sampling timings and the sampled signals are integrated in order to generate a time averaged output signal, thus eliminating errors included in the output signal which are due to noise.

It is the object of the invention to improve a volume measuring device and method according to the preamble of claim 1 and 9, respectively, such that superfluous sensors and circuit elements can be avoided and such that a compact and inexpensive device arrangement can be achieved.

This object is solved by the characterizing features of claims 1 and 9, respectively.

The inventive measuring device and method according to claims 1 and 9 is characterized in that the displacement device disposed in the chamber is driven at a single predetermined frequency, and said filtering means comprises two channels for respectively filtering said first and second output signals, both channels passing only said single predetermined frequency.

Further embodiments of the invention are indicated in the appended subclaims.

The invention will now be described with reference to the accompanying drawings, in which:

Figure 1 is a schematic view showing a first embodiment of the invention;

Figure 2 shows an example of a circuit arrangement which is used in connection with the first embodiment of the invention;

Figure 3 is a graph which demonstrates the noise spectrum which tends to occur in automotive fuel tanks;

Figure 4 is a graph which is similar to that shown in Figure 3, but which additionally shows the noise caused by the heat of fuel being returned to the fuel tank from a fuel injection system or the like;

Figures 5 to 8 are cross-sectional views showing the arrangements which characterize second to fifth embodiments of the invention;

Figure 9 is a graph which demonstrates the accuracy which is obtainable with the invention; and

Figures 10 and 11 are views which show one method in which the invention can be applied to large storage vessels.

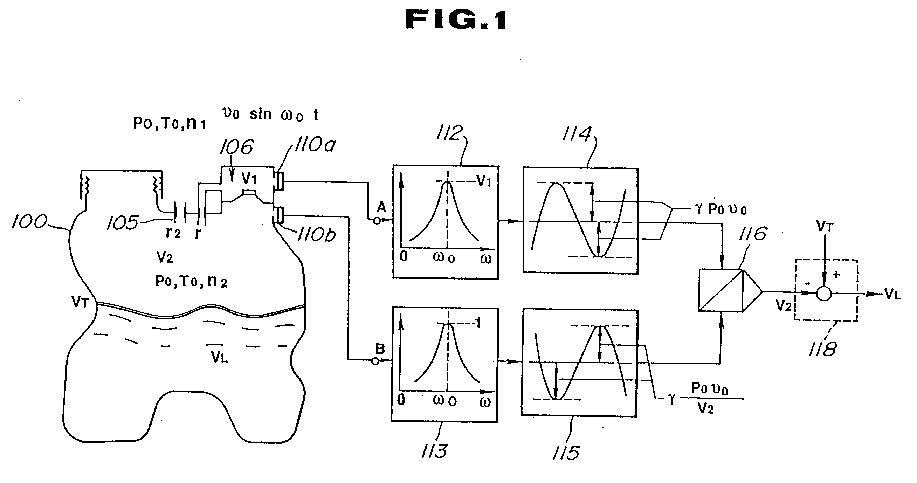

Figure 1 shows (schematically) a first embodiment of the present invention which is applicable to storage vessels which exhibit a rigid construction and which do not readily undergo a change in volume, e.g. vehicular fuel tanks.

In the arrangement a vessel 100, in which a volume VL of grain, powder, liquid or the like is stored, defines what shall be referred to as a main tank. This tank 100 is connected with a small compensation tank or chamber 106. The main tank 100 is further formed with an air bleed orifice 105 through which the interior of the main tank 100 is fluidly communicated with the ambient atmosphere.

A displacement means 200, such as a diaphragm or the like, is arranged in the chamber 106 and arranged to be vibrated at a single predetermined frequency $\omega_0$ which induces a change of pressure in said chamber 106. In the illustrated arrangement this means takes the form of a diaphragm partitioning the chamber into first and second sub-chambers 201 and 202. The chamber 106 is fluidly communicated with the main tank 100 via an orifice r. First and second pressure sensors 110a and 110b are disposed so as to be exposed to the pressure changes in the first and second sub-chambers, 201 and 202, respectively. The outputs A and B of the sensors 110a, 110b are fed respectively to first and second band pass filters 112 and 113 and the outputs of these two filters are fed to a first and second amplitude detection circuit 114 and 115, respectively. The signals output by circuits 114 and 115 are fed to a divider 116, which issues an output signal to a subtractor 118.

The operation of this embodiment is such that when the displacement means is operated in a manner wherein the diaphragm is induced to vibrate at Vo sin $\omega$o t, the changes in pressure as detected by the pressure sensors 110a and 110b are converted into electrical signals A and B. These signals are supplied to the first and second band pass filters 112 and 113 respectively. The latter element is set to that its center frequency corresponds to the angular frequency $\omega$o and to have an amplification ratio of 1. The first filter 112, also having a center frequency corresponding to the angular frequency $\omega$o is connected to, the first amplitude detection circuit 114 which outputs a signal indicative of $\gamma$ vo Po while the band pass filter 113 is connected to the second amplitude detection circuit 115 which outputs a signal indicative of $\gamma$ vo/V2 Po, where $\gamma$ denotes the specific heat ratio inside the chamber and the tank, vo is the maximum volume change which can occur in the chamber, V2 is the vessel volume not occupied by the liquid, and Po is the pressure within the vessel.

The divider 116 converts the signals output from both amplitude detection circuits into a signal indicative of V2 (the unfilled volume of the main tank). The subtractor 118 is arranged to receive a data input indicative of the total volume VT of the main tank. Via subtraction the amount of fuel (i.e. the contents of the main tank) is derived and outputted in the form of a signal indicative of VL.

In this embodiment the amplitude detecting circuits are provided with smoothing circuits for suppressing the effect of noise in the pressure signals produced by the pressure sensors. However, it should be noted that this provision can be omitted if preferred.

In case the fuel tank exhibits a degree of flexibility then a correction stage between the divider and the subtractor may be provided, and a factor $\Delta V$ with the total volume value VT may be included.

In order to achieve the requisite calibration for the instant correction the following equation is utilized:

$$C = \gamma \; \frac{Po \; v}{A1} \; = \; \frac{V2 + \Delta V}{|K1|}$$

In this equation there are two unknowns - $\Delta V$ and $|k1|$. These values are obtained via calibration. Further, the amount of liquid VL can be derived using:

$$VL = VT + \Delta V \cdot C \cdot |k1|$$

wherein:
$\Delta V$ is the pressure induced deflection correction amount; and
$C \cdot |k1|$ is a correction amount for the change in driving frequency.

In case the main tank exhibits a degree of flexibility, the outputs of the amplitude detection circuits 114, 115 become $\gamma$ Po vo$|k1|$ and

$$\gamma \; \frac{vo \; Po}{V2 + \Delta V} |k2|$$

respectively.

Division in the divider gives

$$V2 + \Delta V \frac{|k2|}{|k1|}$$

which is then corrected in the correction stage 117 using

$$\frac{|k1|}{|k2|}$$

developed via a calibration technique to give V2 + $\Delta V$. Subtraction of VT + $\Delta V$ then gives VL.

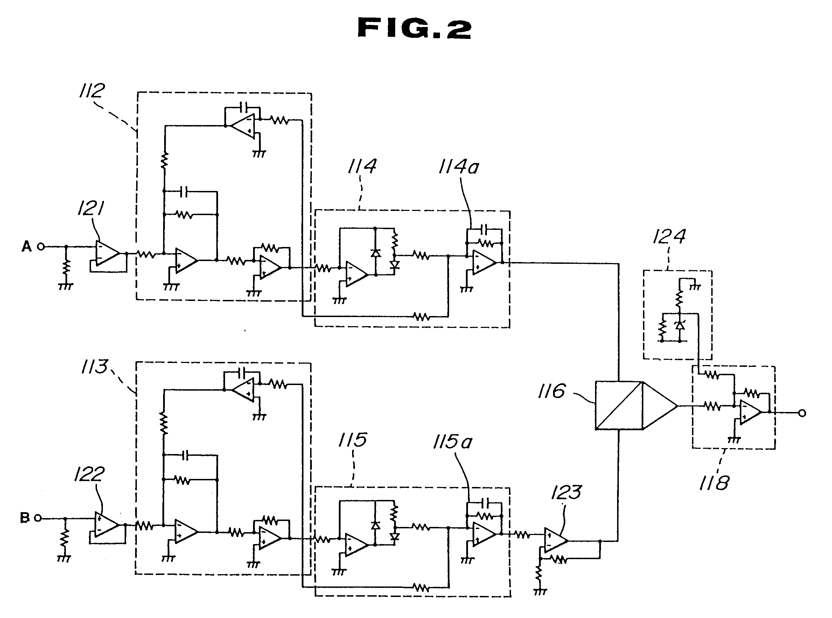

Figure 2 shows an actual example of a circuit of the nature illustrated in block diagram form in Fig. 1. That is to say a circuit which is arranged for use with rigid vessels.

In this arrangement the outputs A and B of microphones 110a and 110b are fed to first and second buffer circuits 121, 122. These circuits 121, 122 are connected to the inputs of first and second band pass filters 112, 113. In this circuit arrangement it is possible to use band pass filters of the nature which enable the Q value of the same to be selectively adjusted.

First and second amplitude detecting circuits 114, 115 are provided with smoothing circuits 114a, 115a which remove the noise peaks while the second amplitude detection circuit has an amplifier 123 connected to its output.

A standard value generating circuit 124 includes a shunt regulator which permits the output to be adjusted to a value indicative of the value VT + V1.

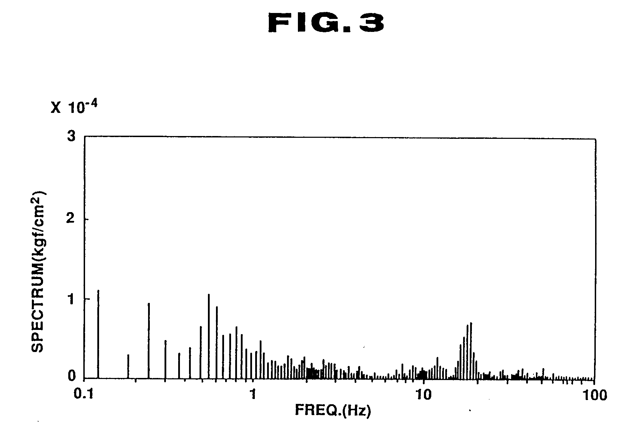

Fig. 3 shows graphically the noise spectrum which tends to occur in the fuel tank of an automotive vehicle during operation of the same. As will be appreciated, low noise levels occur in the 1 - 15 Hz and >20Hz ranges.

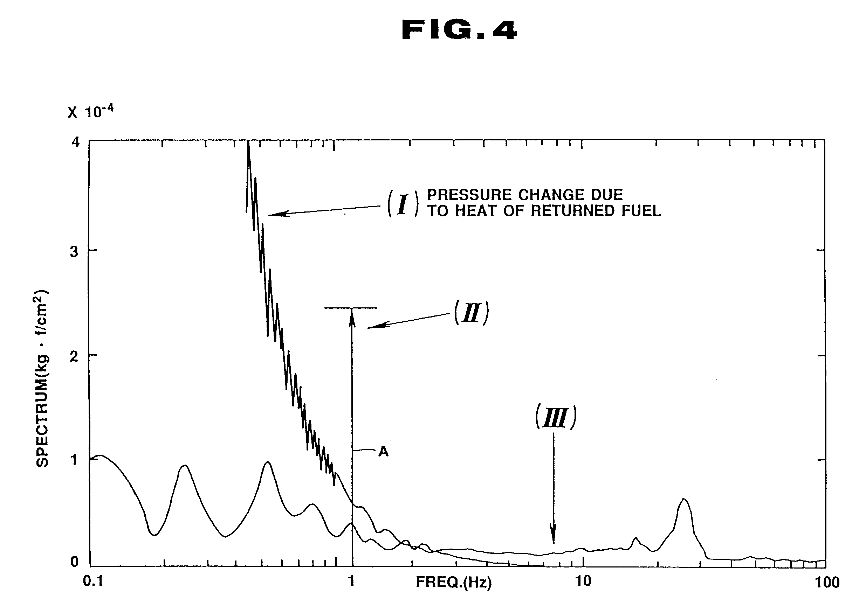

Further, as shown in Fig. 4 in the case excess fuel is returned to the fuel tank such as tends to occur with fuel injected engines, the noise (I) which is caused by the heat contained in the fuel which comes back from the engine, the vibration which is applied externally to the fuel tank walls and the sloshing of the fuel within the tank (III) are such that if the magnitude of the volume change (II) induced at a given frequency by the displacement means, is A. This data is such as to indicate that it is possible to select frequencies in 1 - 25Hz and > 30Hz ranges.

By taking all of the above data into consideration it is deemed appropriate to select the angular frequency $\omega o$ in the 1 - 15Hz and >30Hz ranges as it is possible to achieve a good S/N ratio signal in same.

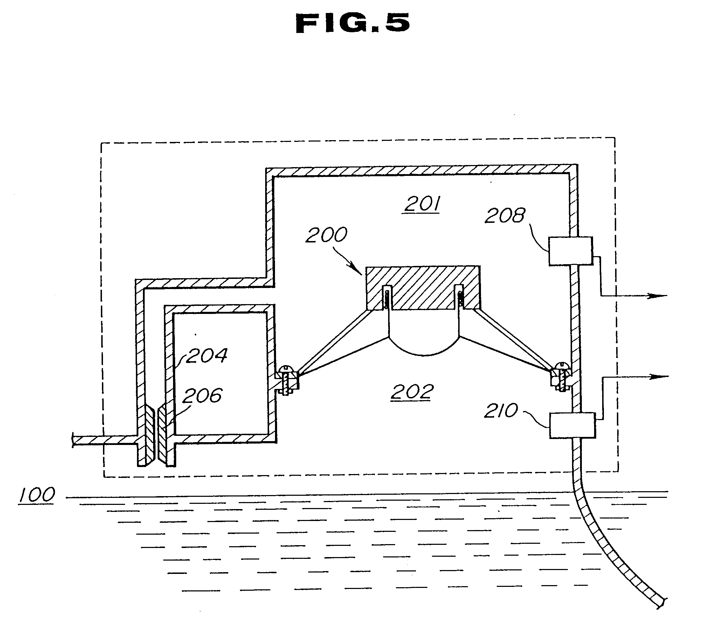

Figs. 5 to 8 show second to fifth embodiments of the invention, wherein speakers and microphones are utilized as a displacement device and as pressure sensors, respectively. The second embodiment shown in Fig 5 is such that a speaker 200 is disposed in a chamber defining structure in a manner to divide the same into first and second sub-chamber sections 201, 202. The upper sub-chamber 201 as seen in the drawings is fluidly communicated with the interior of the main tank by way of a conduit 204. An orifice 206 is disposed in the conduit 204 in order to limit the communication with the main tank 100 to the degree that changes in ambient pressure and temperature alone can be transmitted to the upper sub-chamber.

In this embodiment a dynamic microphone 208 is arranged to be exposed to the interior of the upper sub-chamber 201 while a condensor type microphone 210 is arranged to be exposed to the lower sub-chamber 202. As will be noted from the drawings, the lower sub-chamber 202 is open directly to the interior of the main tank 100. Accordingly, the condensor microphone 210 is thus located in a position to detect the pressure changes in the main tank.

The reason that a dynamic microphone 208 is employed in the upper chamber 201 is that condensor type microphones tend to be sensitive to the point of becoming inoperative if exposed to the pressure changes of the nature which occur in the upper sub-chamber 201 for prolonged periods. The outputs of the microphones 208, 210 are fed to circuit arrangement of the nature illustrated in Fig. 1.

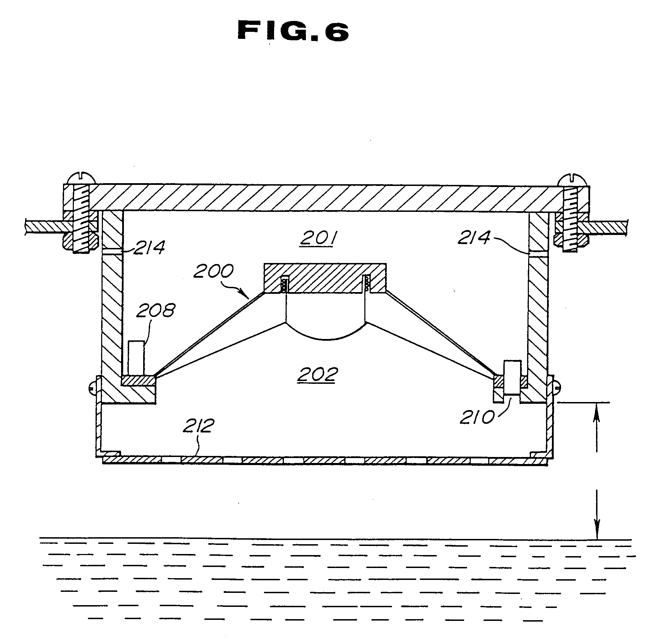

The third embodiment shown in Fig. 6 is such as to include a perforated splash guard 212 which is arranged to enclose the open end of the lower sub-chamber. In place of the conduit and orifice arrangement used in Fig. 5, small diameter bores 214 are formed through the walls of the structure in a manner which permits a very limited amount of fluid communication between the interior of the upper sub-chamber and the interior of the main tank 100.

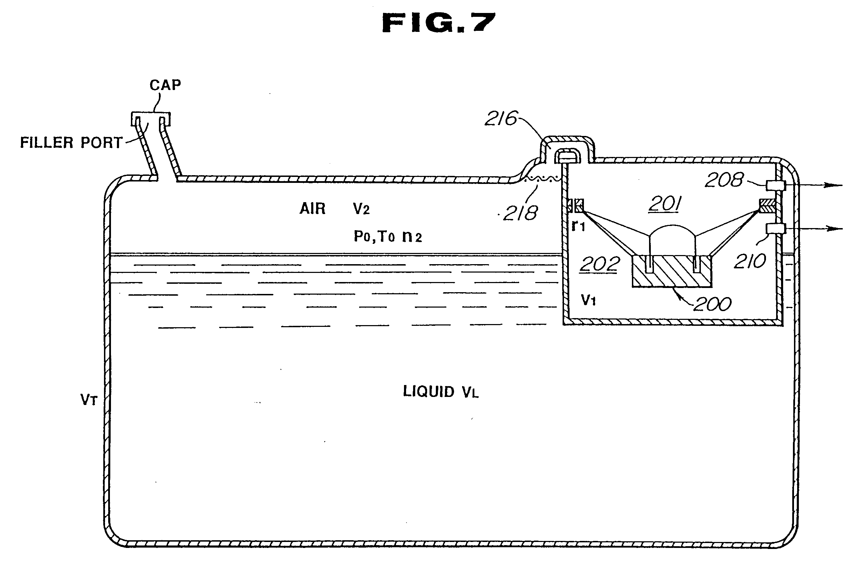

The fourth embodiment shown in Fig. 7 is such that the speaker 200 is arranged to face vertically upward and the sub-chamber 201 which is defined thereabove is arranged to communicate with the interior of the main tank by way of a U-shaped passage 216 and a mesh screen 218. The provision of the mesh screen and the U-shaped passage 216 is deemed to reduce the chances of fuel splashing up into the sub-chamber 201 in which the speakers and microphones are disposed.

In this embodiment, the first and second sub-chambers 201 and 202 are communicated by means of an orifice passage r1 for static pressure equalization.

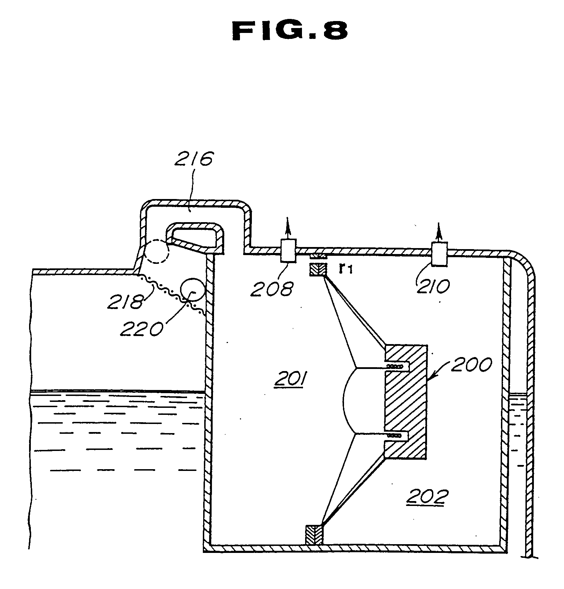

In the fifth embodiment shown in Fig. 8 a float 220 is arranged so as to block the U-shaped passage 216 in the case of large waves. Under normal circumstances this float 220 rests on top of the mesh grid 218. Moreover, in this embodiment the speaker 200 is arranged to face sideways, that is, the diaphragm is arranged vertically.

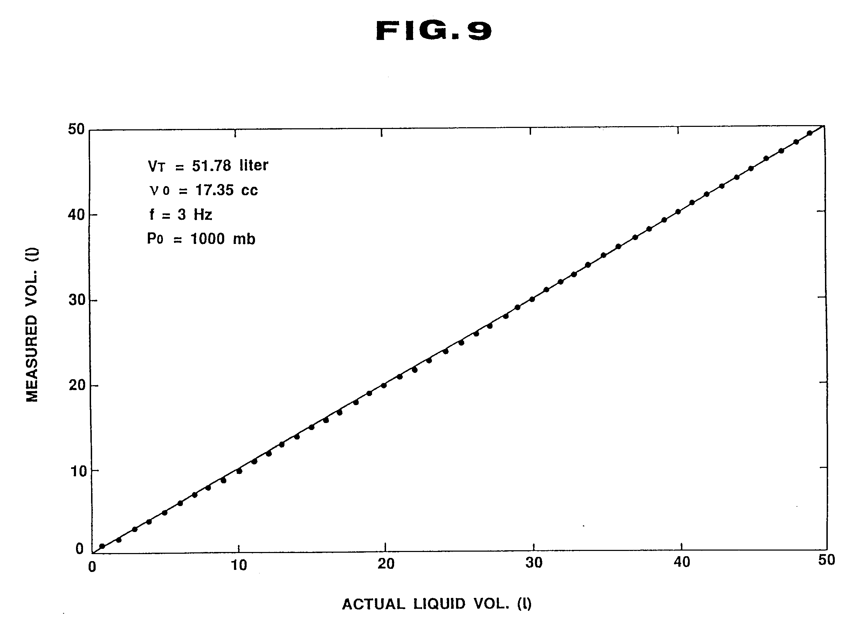

Fig 9. is a graph which shows in terms of actual liquid content and the measured volume the remarkable linearity which is possible with the present invention.

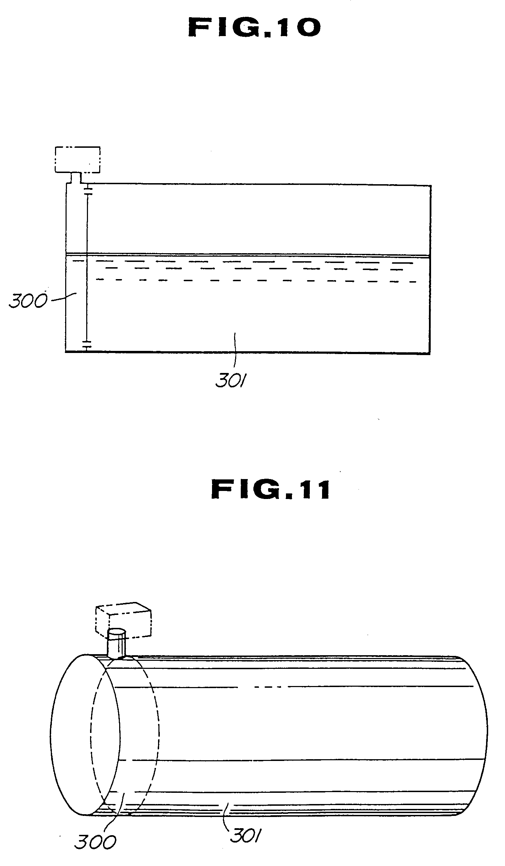

Figs. 10 and 11 show a technique whereby the present invention can be readily applied to very large storage vessels. As shown by partitioning off a section 300 of the tank and permitting only limited communication between the section of the tank 300 which is baffled off and the remainder of the tank 301, as long as the capacity of the section 300 is accurately known, the need to provide a large displacement means is obviated.

## Claims

1. A device for measuring the contents ($V_L$) of a vessel (100), comprising:

means defining a chamber (106);

a displacement device (200) disposed in said chamber for varying a pressure in said chamber, said displacement device (200) comprising a diaphragm, said diaphragm partitioning said chamber into first (201) and second (202) sub-chambers;

passage means (204;214;216) fluidly communicating said chamber with the interior ($V_T$) of said vessel (100);

a first pressure sensor (110a;208) arranged to produce a first output signal (A) indicative of the pressure variations in said first sub-chamber (201);

a second pressure sensor (110b;210) arranged to produce a second output signal (B) indicative of the pressure variations in said second sub-chamber (202);

circuit means (112,113,114,115,116,118) for receiving and processing the output signals (A;B) of said first and second pressure sensors (110a,208;110b,210) and for producing and outputting a signal indicative of the contents ($V_L$) of said vessel (100), said circuit means including filtering means (112,113) for filtering said first and second output signals (A;B),

**characterized in that**

said displacement device (200) varies said pressure inside said chamber at a single predetermined frequency; and

said filtering means (112,113) comprises two channels for respectively filtering said first and second output signals (A,B), both channels passing only said single predetermined frequency.

2. A device as claimed in claim 1
   **characterized in that**
   the first sub-chamber (201) is fluidly communicated with the interior ($V_T$) of said vessel (100) by way of said passage means (204;214;216) and the second sub-chamber (202) is located in the interior ($V_T$) of said vessel (100).

3. A device as claimed in claim 1 or 2
   **characterized in that**
   said diaphragm is driven to vibrate at said single predetermined frequency.

4. A device as claimed in any of claims 1 to 3
   **characterized in that**
   said first and second sub-chambers (201,202) are fluidly communicated by way of an orifice passage (r1).

5. A device as claimed in any of claims 1 to 4
   **characterized in that**

said passage means (216) includes means (218,220) for preventing a liquid from leaking into said chamber (106).

6. A device as claimed in any of claims 1 to 5
   **characterized in that**
   the plane of said diaphragm is arranged vertically.

7. A device as claimed in any of claims 1 to 6
   **characterized in that**
   said first and second pressure sensors (110a,208; 110b,210) are disposed near a peripheral edge of said displacement device (200).

8. A device as claimed in any of claims 1 to 7,
   **characterized in that**
   said second sub-chamber (202) has an open end which is unrestrictedly communicated with the interior ($V_T$) of said vessel (100).

9. A method of measuring the contents ($V_L$) of a vessel (100), comprising the steps of:
   disposing a displacement device (200) in a chamber (106) which is fluidly communicated with the interior ($V_T$) of said vessel (100) by way of a passage means (204;214,216)
   partitioning said chamber into a first (201) and a second (202) sub-chamber by a diaphragm belonging to said displacement device (200);
   energizing said displacement device (200) in order to vary the pressure in said chamber;
   sensing the pressure in said first sub-chamber (201) using a first pressure sensor (110a;208) and producing a first output signal (A) indicative of the pressure in the first sub-chamber (201);
   sensing the pressure in said second sub-chamber (202) using a second pressure sensor (110b;210) and producing a second output signal (B) indicative of the pressure in the second sub-chamber (202); and
   filtering and processing the first and second output signals (A;B) and producing a signal indicative of the contents ($V_L$) of said vessel (100),
   **characterized in that**
   said pressure in said chamber is varied at a single predetermined frequency; and
   said step of filtering is carried out by two channels for respectively filtering said first and second output signals (A,B), both channels passing only said single predetermined frequency.

10. A method as claimed in claim 9
    **characterized in that**

the variation of the pressure in said chamber (106) is carried out by vibrating the diaphragm of the displacement device (200) at said single predetermined frequency.

**Patentansprüche**

1. Vorrichtung zur Messung der Inhalte ($V_L$) eines Vorratsbehälters (100) mit
einer eine Kammer (106) begrenzenden Einrichtung;
einer in der Kammer angeordneten Verschiebeeinrichtung (200) zum Ändern eines Druckes in der Kammer, wobei die Verschiebeeinrichtung eine Membran aufweist, die die Kammer in eine erste (201) und eine zweite (202) Unterkammer teilt;
einer Durchlaßeinrichtung (204; 214; 216), die die Kammer strömungsmäßig mit dem Inneren ($V_T$) des Vorratsbehälters (100) verbindet;
einem ersten Drucksensor (110a; 208), der so angeordnet ist, daß er ein die Druckänderungen in der ersten Unterkammer (201) angebendes erstes Ausgangssignal (A) erzeugt;
einem zweiten Drucksensor (110b; 210), der so angeordnet ist, daß er ein die Druckänderungen in der zweiten Unterkammer (202) angebendes zweites Ausgangssignal (B) erzeugt;
einer Schaltungseinrichtung (112, 113, 114, 115, 116, 118) zum Empfangen und Verarbeiten der Ausgangssignale (A; B) der ersten und zweiten Drucksensoren (110a, 208; 110b, 210) und zum Erzeugen und Abgeben eines die Inhalte ($V_L$) des Vorratsbehälters (100) angebenden Signals, wobei die Schaltungseinrichtung eine Filtereinrichtung (112, 113) zum Filtern der ersten und zweiten Ausgangssignale (A; B) aufweist;
**dadurch gekennzeichnet**, daß
die Verschiebeeinrichtung (200) den Druck innerhalb der Kammer bei einer einzigen vorbestimmten Frequenz ändert und
die Filtereinrichtung (112, 113) zwei Kanäle zum jeweiligen Filtern der ersten und zweiten Ausgangssignale (A; B) aufweist, wobei beide Kanäle nur diese einzige vorbestimmte Frequenz hindurchlassen.

2. Vorrichtung nach Anspruch 1,
**dadurch gekennzeichnet**, daß
die erste Unterkammer (201) strömungsmäßig mit dem Inneren ($V_T$) des Vorratsbehälters (100) mit Hilfe der Durchlaßeinrichtung (204; 214, 216) verbunden ist und die zweite Unterkammer (202) in dem Inneren ($V_T$) des Vorratsbehälters (100) angeordnet ist.

3. Vorrichtung nach Anspruch 1 oder 2,
**dadurch gekennzeichnet**, daß
die Membran angetrieben ist, um mit der einzigen vorbestimmten Frequenz zu schwingen.

4. Vorrichtung nach einem der Ansprüche 1 bis 3,
**dadurch gekennzeichnet**, daß
die ersten und zweiten Unterkammern (201, 202) strömungsmäßig mit Hilfe eines Drosseldurchlasses (r1) miteinander verbunden sind.

5. Vorrichtung nach einem der Ansprüche 1 bis 4,
**dadurch gekennzeichnet**, daß
die Durchlaßeinrichtung (216) eine Einrichtung (218, 220) zum Verhindern des Leckens einer Flüssigkeit in die Kammer (106) umfaßt.

6. Vorrichtung nach einem der Ansprüche 1 bis 5,
**dadurch gekennzeichnet**, daß
die Ebene der Membran vertikal angeordnet ist.

7. Vorrichtung nach einem der Ansprüche 1 bis 6,
**dadurch gekennzeichnet**, daß
die ersten und zweiten Drucksensoren (110a, 208; 110b, 210) nahe einer Umfangskante der Verschiebeeinrichtung (200) angeordnet sind.

8. Vorrichtung nach Ansprüche 1 bis 7,
**dadurch gekennzeichnet**, daß
die zweite Unterkammer (202) ein offenes Ende hat, das uneingeschränkt mit dem Inneren ($V_T$) des Vorratsbehälters (100) strömungsverbunden ist.

9. Verfahren zur Messung der Inhalte ($V_L$) eines Vorratsbehälters (100) mit den Schritten:
Anordnen einer Verschiebeeinrichtung (200) in einer Kammer (106), die mit dem Inneren ($V_T$) des Vorratsbehälters (100) mit Hilfe einer Durchlaßeinrichtung (204; 214, 216) strömungsverbunden ist;
Teilen der Kammer in eine erste (201) und eine zweite (202) Unterkammer mit Hilfe einer Membran, die zu der Verschiebeeinrichtung (200) gehört;
Erregen der Verschiebeeinrichtung (200), um den Druck in der Kammer zu ändern;
Erfassen des Drucks in der ersten Unterkammer (201) unter Verwendung eines ersten Drucksensors (110a; 208) und Erzeugen eines ersten Ausgangssignals (A), das den Druck in der ersten Unterkammer (201) angibt;
Erfassen des Druckes in der zweiten Unterkammer (202) unter Verwendung eines zweiten Drucksensors (110b; 210) und Erzeugen eines zweiten Ausgangssignals (B), das den Druck in der zweiten Unterkammer (202) angibt, und

Filtern und Verarbeiten der ersten und zweiten Ausgangssignale (A; B) und Erzeugen eines die Inhalte (V$_L$) des Vorratsbehälters (100) angebenden Signals;

**dadurch gekennzeichnet**, daß

der Druck in der Kammer bei einer einzigen vorbestimmten Frequenz geändert wird und

das Filtern mit zwei Kanälen zum jeweiligen Filtern der ersten und zweiten Ausgangssignale (A; B) ausgeführt wird, wobei beide Kanäle nur diese einzige vorbestimmte Frequenz hindurchlassen.

10. Verfahren nach Anspruch 9,

**dadurch gekennzeichnet**, daß

die Änderung des Druckes in der Kammer (106) durch Schwingen der Membran der Verschiebeeinrichtung (200) mit der einzigen vorbestimmten Frequenz ausgeführt wird.

**Revendications**

1. Dispositif de mesure du contenu (V$_L$) d'un récipient (100), comprenant :

un moyen définissant une chambre (106) ;

un dispositif de déplacement (200) disposé dans ladite chambre pour faire varier une pression dans ladite chambre, ledit dispositif de déplacement (200) comprenant un diaphragme, ledit diaphragme divisant ladite chambre en des première (201) et deuxième (202) sous-chambres ;

des moyens formant passage (204 ; 214 ; 216) établissant une communication de fluide entre ladite chambre et l'intérieur (V$_T$) dudit récipient (100) ;

un premier capteur de pression (110a ; 208) agencé pour produire un premier signal de sortie (A) indiquant les variations de pression dans ladite première sous-chambre (201) ;

un deuxième capteur de pression (110b ; 210) agencé pour produire un deuxième signal de sortie (B) indiquant les variations de pression dans ladite deuxième sous-chambre (202) ;

des moyens formant circuit (112, 113, 114, 115, 116, 118) pour recevoir et traîter les signaux de sortie (A ; B) desdits premier et deuxième capteurs de pression (110a, 208 ; 110b, 210) et pour produire et émettre un signal indiquant le contenu (V$_L$) dudit récipient (100), lesdits moyens formant circuit incluant des moyens filtrants (112, 113) pour filtrer lesdits premier et deuxième signaux de sortie (A ; B),

caractérisé en ce que

ledit dispositif de déplacement (200) fait varier ladite pression à l'intérieur de ladite chambre à une seule fréquence prédéterminée ; et

lesdits moyens filtrants (112, 113) comprennent deux canaux pour filtrer respectivement lesdits premier et deuxième signaux de sortie (A, B), les deux canaux faisant passer seulement ladite fréquence unique prédéterminée.

2. Dispositif selon la revendication 1, caractérisé en ce que la première sous-chambre (201) est en communication de fluide avec l'intérieur (V$_T$) dudit récipient (100) par l'intermédiaire desdits moyens de passage (204 ; 214; 216), et

ladite deuxième sous-chambre (202) est située à l'intérieur (V$_T$) dudit récipient (100).

3. Dispositif selon la revendication 1 ou 2, caractérisé en ce que ledit diaphragme est amené à vibrer à ladite fréquence unique prédéterminée.

4. Dispositif selon l'une des revendications 1 à 3, caractérisé en ce que lesdites première et deuxième sous-chambres (201, 202) sont en communication de fluide par l'intermédiaire d'un passage à orifice (r1).

5. Dispositif selon l'une des revendications 1 à 4, caractérisé en ce que ledit moyen formant passage (216) comprend un moyen (218, 220) pour empêcher une fuite du liquide dans ladite chambre (106).

6. Dispositif selon l'une des revendications 1 à 5, caractérisé en ce que le plan dudit diaphragme est agencé verticalement.

7. Dispositif selon l'une des revendications 1 à 6, caractérisé en ce que lesdits premier et deuxième capteurs de pression (110a, 208 ; 110b, 210) sont disposés prés d'un bord périphérique dudit dispositif de déplacement (200).

8. Dispositif selon l'une des revendications 1 à 7, caractérisé en ce que ladite deuxième sous-chambre (202) a une extrémité ouverte qui communique d'une manière non restreinte avec l'intérieur (V$_T$) dudit récipient (100).

9. Procédé de mesure du contenu (V$_L$) d'un récipient (100) comprenant les étapes consistant à :

disposer un dispositif de déplacement (200) dans une chambre (106) qui est en communication de fluide avec l'intérieur (V$_T$) dudit récipient (100) par un moyen formant passage (204 ; 214, 216),

diviser ladite chambre en une première (201) et une deuxième (202) sous-chambre par un diaphragme faisant partie dudit dispositif de déplacement (200) ;

exciter ledit dispositif de déplacement (200) pour faire varier la pression dans ladite chambre ;

capter la pression dans ladite première sous-chambre (201) en utilisant un premier capteur de pression (110a ; 208) et à produire un premier signal de sortie (A) indiquant la pression dans la première sous-chambre (201) ;

capter la pression dans ladite deuxième sous-chambre (202) en utilisant un deuxième capteur de pression (110b ; 210) et à produire un deuxième signal de sortie (B) indiquant la pression dans la deuxième sous-chambre (202) ; et

filtrer et traîter les premier et deuxième signaux de sortie (A ; B) et produire un signal indiquant le contenu ($V_L$) dudit récipient (100), caractérisé en ce que

on fait varier ladite pression dans ladite chambre à une fréquence unique prédéterminée ; et ladite étape de filtration est excécutée par deux canaux pour filtrer respectivement lesdits premier et deuxième signaux de sortie (A, B), les deux canaux faisant passer seulement ladite fréquence unique prédéterminée.

10. Procédé selon la revendication 9, caractérisé en ce que la variation de la pression dans ladite chambre (106) est exécutée en faisant vibrer le diaphragme du dispositif de déplacement (200) à ladite fréquence unique prédéterminée.

# FIG.1

# FIG.2

EP 0 350 074 B1

# FIG.3

FIG. 4

EP 0 350 074 B1

EP 0 350 074 B1

# FIG.5

201

208

200

204

206

202

210

100

## FIG.6

**FIG.7**

CAP

FILLER PORT

AIR  V2

P0,T0 n2

LIQUID VL

VT

216

218

208

210

200

201

202

r1

V1

# FIG.8

## FIG.9

$V_T$ = 51.78 liter
$\nu_0$ = 17.35 cc
f = 3 Hz
$P_0$ = 1000 mb

MEASURED VOL. (l)

ACTUAL LIQUID VOL. (l)

EP 0 350 074 B1

# FIG.10

# FIG.11